# EUROPEAN PATENT APPLICATION

(11) **EP 2 172 866 A1**
(43) Date of publication of application: **07.04.2010**
(21) Application number: 07791306.9
(22) Date of filing: 25.07.2007
(51) Int. Cl.: G06F 21/22

(54) **INFORMATION PROCESSOR AND TAMPERING VERIFICATION METHOD**

(71) Applicant: Panasonic Corporation, Kadoma-shi Osaka 571-8501 (JP)
(72) Inventor: ANZAI, JUN, Osaka-shi Osaka 540-6207 (JP); MATSUSHIMA, Hideki, Osaka-shi Osaka 540-6207 (JP); HAGA, Tomoyuki, Osaka-shi Osaka 540-6207 (JP)
(74) Representative: Grünecker, Kinkeldey, Stockmair & Schwanhäusser Anwaltssozietät
(86) International application number: PCT/JP2007/064590
(87) International publication number: WO 2009/013825

(57) **Abstract**

An object of the present invention is to provide an information processing apparatus in which a secure CPU and a nort-secure CPU are included, that is capable of reliably detecting falsification of programs. The information processing apparatus according to the present invention includes a secure CPU 1, a non-secure CPU 2, a nonvolatile memory 3, a boot ROM 11, and a RAM 12. The secure CPU 1 verifies the presence or absence of falsification of various programs stored in the nonvolatile memory 3 with reference to a first falsification verification program stored in the boot ROM 11, according to a verification result, and loads a secure CPU target program 31 stored in the nonvolatile memory 3 into the RAM 12, and outputs a non-secure CPU target program stored in the nonvolatile memory 3 to the non-secure CPU 2 with reference to a load program loaded in the RAM 12.

## Description

### Technical Field

The present invention relates to an information processing apparatus including a processor (CPU) that switches a processor mode as needed at the time of executing a program code, and to a falsification verification method performed by the information processing apparatus.

### Background Art

In recent years, research and development of secure processors have been advanced. A secure processor means a processor in which data handled outside the processor is encrypted (encrypted with an encryption key, or encrypted with a digital signature), and on the other hand, the encrypted data is decrypted inside the processor, which enables to make data reading from the outside difficult. Hereinafter, a mode in which a secure processor executes data processing by using the data while protecting data from unauthorized reading from the outside is called a secure mode, and on the other hand, a mode in which data is not protected from unauthorized reading from the outside and data processing is performed by using the data is called a non-secure mode.

A CPU which is capable of executing a program code in secure mode (this CPU is hereinafter called a secure CPU) is increased in the cost of manufacturing in comparison to a CPU which is capable of executing a program code only in non-secure mode (this CPU is hereinafter called a non-secure CPU). There are recent information processing apparatuses in which multiple CPUs are mounted therein. However, in cases where only secure CPUs are utilized as these multiple CPUs, the information processing apparatuses themselves get expensive. Therefore, in the case in which multiple CPUs are mounted in an information processing apparatus, a configuration in which a secure CPU and a non-secure CPU are used together is proposed.

For example, in Patent Document 1, a PC in which a non-secure CPU is mounted and a protection device in which a secure CPU is mounted, that is connected to the PC are described, and there is disclosed a method for verifying the presence or absence of falsification at the time of booting by the PC with the protection device. In Patent Document 1, when the PC is turned on, the PC activates the non-secure CPU in the PC, and thereafter activates the secure CPU serving as the protection device connected to the PC. The protection device in which the secure CPU is activated under the control of the PC reads out an encrypted program stored in an HDD of the PC, and decrypts the encrypted program to make the program tamper-resistant, and stores a hash value of the program made tamper-resistant, and loads the program made tamper-resistant in a memory of the non-secure CPU in the PC. The non-secure CPU in the PC activates an operating system on the basis of the program made tamper-resistant, which is loaded in the memory. On the other hand, the protection device periodically reads out the program made tamper-resistant from the memory of the non-secure CPU in the PC, and calculates a hash value of the program, and verifies whether or not the program which is loaded in the memory of the non-secure CPU in the CPU is falsified according to whether or not the hash value corresponds to the stored hash value.
Patent Document 1: JP-A-2005-085188

### Disclosure of the Invention

### Problems to be Solved by the Invention

However, with the protection device disclosed in Patent Document 1, if the program is falsified before the secure CPU in the protection device reads out the encrypted program which is stored in the HDD of the PC, a hash value calculated on the basis of the falsified program is stored, which makes it impossible to detect by the following falsification verification processing that the program is falsified. Further, in a processing process in which the secure CPU in the protection device is activated after the non-secure CPU in the PC is activated, the security of the processing of activating the non-secure CPU is not ensured by the secure CPU, which brings about a problem in security.

The present invention has been achieved in consideration of the above-described circumstances, and an object of the present invention is to provide an information processing apparatus in which a secure CPU and a non-secure CPU are mounted, that is capable of reliably detecting falsification of programs, and a falsification verification method by the information processing apparatus.

### Means for Solving the Problems

According to the present invention, there is provided an information processing apparatus including: a first CPU that executes various programs in a processor mode with higher security than that of a second CPU; a program storage section that stores the various programs to be executed by the first CPU and various programs to be executed by the second CPU; a falsification verification program storage section that stores a falsification verification program for verifying the presence or absence of falsification of the various programs; and a first RAM, wherein the first CPU includes: a first falsification verification unit which is adapted to verify the presence or absence of falsification of the various programs stored in the program storage section with reference to the falsification verification program stored in the falsification verification program storage section; a first program activation unit which is adapted to load the various programs to be executed by the first CPU stored in the program storage section into the first RAM according to a result verified by the first falsification verification unit; and a load unit which is adapted to output the various programs to be executed by the second CPU stored in the program storage section to the second CPU.

According to the present invention, there is provided a falsification verification method performed by a second CPU that executes various programs in a processor mode with higher security than that of a first CPU, the method including the steps of: verifying the presence or absence of falsification of various programs stored in a nonvolatile memory with reference to a falsification verification program stored in a boot memory; loading various programs to be executed by the first CPU stored in the nonvolatile memory into the first RAM according to a verification result; and outputting the various programs to be executed by the second CPU stored in the nonvolatile memory to the second CPU.

The information processing apparatus may further includes the second CPU.

The information processing apparatus is configured in that the second CPU includes a second program activation unit which is adapted to load the various programs to be executed by the second CPU which are input from the first CPU into the second RAM.

According to this configuration, it is possible to reliably detect falsification of the programs stored in the nonvolatile memory (the program storage section).

The information processing apparatus may be configured in that the first CPU further includes an output unit, and when the presence of falsification is detected as a result of verification performed by the first falsification verification unit, the first program activation unit does not load all the various programs to be executed by the first CPU stored in the program storage section, or the various programs in which the presence of falsification is detected, and when the presence of falsification is detected as a result of verification performed by the first falsification verification unit, the output unit outputs that the presence of falsification is detected.

According to this configuration, it is possible to notify a user of the information processing apparatus that falsification of the programs is detected.

The information processing apparatus may be configured in that the first CPU includes a first authentication unit which is adapted to authenticate the second CPU, and the load unit outputs the various programs to be executed by the second CPU stored in the program storage section to the second CPU succeeding in authentication by the first authentication unit.

The information processing apparatus may be configured in that the second CPU includes a second authentication unit which is adapted to authenticate the first CPU.

The information processing apparatus may be configured in that the authentication program is made tamper-resistant.

According to this configuration, it is possible to output the various programs stored in the nonvolatile memory (the program storage section) to only the CPU that must execute the programs, thus it is possible to prevent the programs from being leaked out to the other CPU which cannot succeed in authentication.

The information processing apparatus may be configured in that the first CPU includes a second falsification verification unit which is adapted to verify the presence or absence of falsification of the various programs stored in the program storage section with reference to a falsification verification program loaded in the first RAM by the first program activation unit.

According to this configuration, the security of the falsification verification program loaded in the RAM 12 is to be ensured by falsification verification with the falsification verification program stored in the boot ROM (falsification verification program storage section). As a result, it is possible to update the falsification verification program stored in the nonvolatile memory (the program storage section).

The information processing apparatus may be configured in that the second CPU includes a third falsification verification unit which is adapted to verify the presence or absence of falsification of the various programs to be executed by the second CPU which are input from the first CPU, with reference to a falsification verification program loaded in the second RAM by the second program activation unit.

The information processing apparatus may be configured in that the third falsification verification unit is made tamper-resistant.

According to this configuration, it is possible to shorten a time taken for falsification verification processing by causing the two CPUs to perform the falsification verification processing.

### Advantageous Effects of the Invention

In accordance with the information processing apparatus and the falsification verification method of the present invention, it is possible to reliably detect falsification of the programs by the secure CPU and the non-secure CPU.

### Brief Description of the Drawings

Fig. 1 is a configuration diagram of hardware in an information processing apparatus according to a first embodiment of the present invention.
Fig. 2 is a processing sequence at the time of bootstrapping of a secure CPU and a non-secure CPU by the information processing apparatus according to the first embodiment of the present invention.
Fig. 3 is a processing sequence at the time of session-establishment by the information processing apparatus according to the first embodiment of the present invention.
Fig. 4 is a configuration diagram of hardware in an information processing apparatus according to a second embodiment of the present invention.
Fig. 5 is a processing sequence at the time of bootstrapping of a secure CPU and a non-secure CPU by the information processing apparatus according to the second embodiment of the present invention.

### Description of Reference Numerals and Signs

- 1: Secure CPU
- 11: Boot ROM
- 111: First falsification verification program
- 112: IPL program
- 12: RAM
- 121: Activation control program
- 122: Load program
- 123: Authentication program
- 24: Second falsification verification program
- 2: Non-secure CPU
- 21: RAM
- 211: IPL program
- 212: Activation control program
- 213: Authentication program subjected to TRS
- 214: Falsification verification program subjected to TRS
- 3: Nonvolatile memory
- 31: Secure CPU target program
- 32: Non-secure CPU target program

### Best Mode for Carrying Out the Invention

Hereinafter, an information processing apparatus according to embodiments of the present invention will be described in detail.

### (First Embodiment)

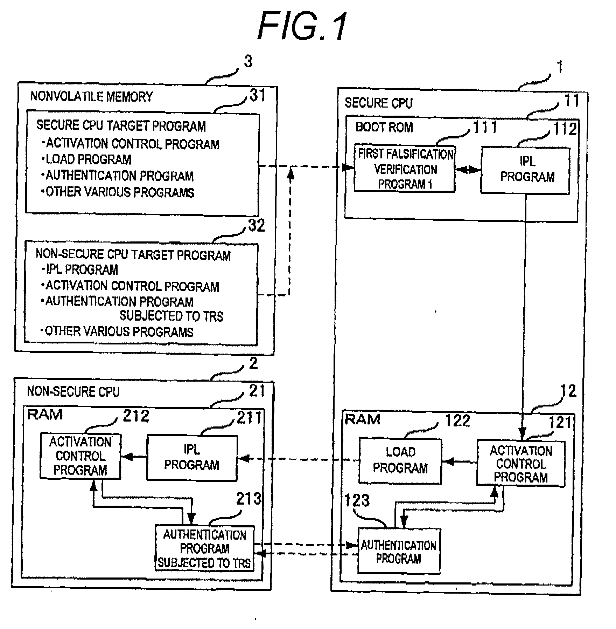

An information processing apparatus according to a first embodiment of the present invention will be described. First, a configuration of hardware in the information processing apparatus according to the first embodiment of the present invention will be described with reference to a configuration diagram of the hardware in the information processing apparatus according to the first embodiment of the present invention shown in Fig. 1. The information processing apparatus according to the first embodiment of the present invention includes a secure CPU 1, a non-secure CPU 2, and a nonvolatile memory 3. Further, the secure CPU 1 includes a boot ROM 11 and a RAM 12, and the non-secure CPU 2 includes a RAM 21. Note that the RAM 12 and the RAM 21 may be the same memory, and may be handled as two memories virtually by separating the area used by the CPU 1 and the CPU 2.

The boot ROM 11 of the secure CPU 1 is a read-only storage device, that stores a first falsification verification program for verifying the presence or absence of falsification of programs, and a program (IPL: Initial Program Loader) to be executed when the information processing apparatus is turned on in the information processing apparatus therein. Further, the secure CPU 1 loads a secure CPU target program 31 read out of the nonvolatile memory 3 in the RAM 12 of the secure CPU 1. The secure CPU 1 executes programs stored or loaded in the boot ROM 11 and the RAM 12. Various processings executed by the secure CPU 1 will be described with reference to sequences which will be described later.

The non-secure CPU 2 executes a non-secure CPU target program 32 which is read out of the nonvolatile memory 3 to be loaded in the RAM 21 of the non-secure CPU 2 by the secure CPU 1. Various processings executed by the non-secure CPU 2 will be described with reference to the sequences which will be described later. Note that the CPU 1 and the CPU 2 are assumed to be mounted as different chips or to be mounted as two cores on the same chip. Further, in the case in which there are multiple non-secure CPUs, the secure CPU is capable of loading falsification-verified programs in series to the non-secure CPUs.

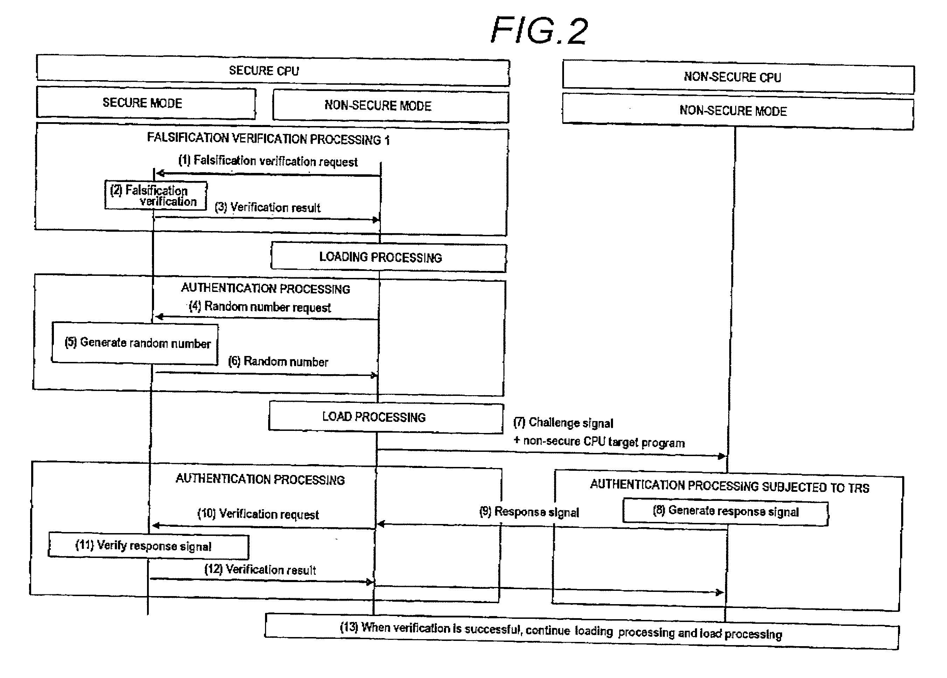

In the nonvolatile memory 3, the secure CPU target program 31 (an activation control program, a load program, an authentication program, and other various programs) to be executed by the secure CPU 1, and the non-secure CPU target program 32 (an IPL program, an activation control program, an authentication program subjected to TRS, and other various programs) to be executed by the non-secure CPU 2 are stored. Hereinafter, as shown in Fig. 2, the processings at the time of bootstrapping of the secure CPU and the non-secure CPU will be described with reference to the sequences of processings at the time of bootstrapping of the secure CPU and the non-secure CPU by the information processing apparatus according to the first embodiment of the present invention.

In the sequence of Fig. 2, the secure CPU 1 is capable of switching two processor modes of a secure mode and a non-secure mode, and at the time of carrying out processing required to have higher security, the secure CPU 1 executes programs in secure mode. On the other hand, the non-secure CPU 2 executes programs only in non-secure mode.

The information processing apparatus according to the first embodiment of the present invention activates the secure CPU 1 first when the information processing apparatus is turned on. The secure CPU 1 reads out initial addresses of the programs to be first read out of the nonvolatile memory 3 to activate (the respective programs in the secure CPU target program 31 and the respective programs in the non-secure CPU target program 32 in Fig. 1) with reference to an IPL (Initial Program Loader) program stored in the boot ROM 12. The secure CPU 1 specifies programs to be falsifcation-verified in the nonvolatile memory 3 on the basis of the initial addresses read out with reference to the IPL program, and carries out falsification verification processing with reference to the first falsification verification program stored in the boot ROM 11. By carrying out the falsification verification processing by the secure CPU 1, it is possible to further improve the security thereof more than that of the similar falsification verification processing by the non-secure CPU 2. Further, by activating the secure CPU 1 first at the time of turning on the information processing apparatus, it is possible to ensure the security of processings by the non-secure CPU 2 which is activated thereafter, by the secure CPU 1.

The falsification verification processing by the secure CPU 1 is as follows. The secure CPU 1 activated in non-secure mode notifies the secure CPU 1 in secure mode of a falsification verification request. When the secure CPU 1 in secure mode is notified of the falsification verification request, the secure CPU 1 in secure mode performs falsification verification for the respective programs (the activation control program, the load program, the authentication program, and the other various programs) in the secure CPU target program 31 and the respective programs (the IPL program, the activation control program, the authentication program subjected to TRS, and the other various programs) in the non-secure CPU target program 32 which are recorded in the nonvolatile memory 3. As a technique of falsification verification, well-known falsification verification such as a technique using a digital signature or a technique using an HMAC is applied. The secure CPU 1 in secure mode that has performed falsification verification notifies the secure CPU 1 in non-secure mode of the result of falsification verification. When the CPU 1 in non-secure mode is notified that there is falsification in at least one of the activation control program, the load program, and the authentication program in the secure CPU target program 31 as a result of the falsification verification, the secure CPU 1 in non-secure mode does not load all those programs in the RAM 12. Note that the programs may be loaded in the RAM, and only the execution thereof may be prohibited. In the case in which the programs are not loaded, an error may be indicated or an LED may be flashed to notify a user of it. Further, the secure CPU 1 in non-secure mode is notified that there is falsification in at least one of the IPL program, the activation control program, and the authentication program subjected to TRS in the non-secure CPU target program 32 as a result of the falsification verification, the secure CPU 1 in non-secure mode does not load all those programs in the RAM 21 of the non-secure CPU 2. In this way, the secure CPU 1 carries out falsification verification processing for the respective programs in the secure CPU target program 31 and the non-secure CPU target program 32 which are recorded in the nonvolatile memory 3, which makes it possible to further improve the security thereof more than that of the similar falsification verification processing by the non-secure CPU 2, and to reliably detect falsification of the programs. Note that, in the present embodiment, the CPU 1 in non-secure mode is first activated. However, the CPU 2 in secure mode may be first activated in order to further improve the security thereof.

When the secure CPU 1 in non-secure mode is notified that there is no falsification to the respective programs in the secure CPU target program 31 and the respective programs in the non-secure CPU target program 32 as a result of the falsification verification, first, the secure CPU 1 in non-secure mode loads an activation control program 121 in the secure CPU target program 31 read out of the nonvolatile memory 3, in the RAM 12, and executes the activation control program. The activation control program 121 has a function of instructing the secure CPU 1 on programs to be loaded in the RAM 12, to cause the secure CPU 1 to load the programs. Next, the secure CPU 1 in non-secure mode loads a load program 122 and an authentication program 123 in the RAM 12 with reference to the activation control program 121. The loading of the activation control program 121, the load program 122, and the authentication program 123, by the secure CPU 1, to the RAM 12, corresponds to the loading processing in Fig. 2.

The secure CPU 1 in non-secure mode executes the load program 122 loaded in the RAM 12. The load program 122 has a function of causing the secure CPU 1 to load the non-secure CPU target program 32 read out of the nonvolatile memory 3 in the RAM 21 of the non-secure CPU 2. Therefore, the secure CPU 1 which has executed the load program 122 reads out the respective programs (the IPL program, the activation control program, and the authentication program subjected to TRS) in the non-secure CPU target program 32 from the nonvolatile memory 3, to load those in the RAM 21 of the non-secure CPU 2 (which corresponds to the load processing in Fig. 2). On the other hand, the non-secure CPU 2 in which the non-secure CPU target program 32 is loaded in the RAM 21 reads out an initial address of an activation control program to be first read out of the RAM 21 to activate with reference to an IPL program 211. The non-secure CPU 2 specifies the activation control program 212 stored in the RAM 21 on the basis of the initial address of an activation control program 212 read out with reference to the IPL program 211, and executes the activation control program 212. The activation control program 212 has a function of instructing the non-secure CPU 2 on programs to be executed thereby. Next, the non-secure CPU 2 executes an authentication program subjected to TRS 213 specified with reference to the activation control program 212.

Next, the secure CPU 1 in non-secure mode executes the authentication program 123 loaded in the RAM 12. The authentication program 123 has a function for causing the secure CPU 1 to authenticate the non-secure CPU 2.
In the embodiment of the present invention, it is assumed that the secure CPU 1 performs authentication with the non-secure CPU 2 in accordance with a challenge and response system. Because it is necessary for the secure CPU 1 to load the other various programs in the non-secure CPU target program 32 to be executed by the non-secure CPU 2, only into the RAM 21 of the non-secure CPU 2, it is necessary to authenticate in advance that the CPU in communication is the non-secure CPU 2. As a flow of the authentication processing at the time of executing the authentication program 123, the secure CPU 1 generates a random number to store the random number value, and transmits the random number value as a challenge signal to the non-secure CPU 2 (or transmits a random number value encrypted with an authentication key used in common with the non-secure CPU 2 as a challenge signal to the non-secure CPU 2. The non-secure CPU 2 generates a response signal from the challenge signal and an authentication key (this authentication key is stored as data in the authentication program subjected to TRS (Tamper Resistant Software). Note that, the authentication program subjected to TRS is made tamper-resistant, and thus the authentication key as well is protested.), and sends back the response signal to the secure CPU 1 (or sends back a response signal that the challenge signal is decrypted with the authentication key to the secure CPU 1). The secure CPU 1 compares the stored random number with a value that the response signal decrypted with the authentication key used in common with the non-secure CPU 2 (or compares the stored random number with the response signal), to judge whether the authentication with the non-secure CPU 2 is successful or failed. Note that the rolls of the secure CPU 1 and the non-secure CPU 2 in the above-described authentication processing may be interchanged, and the non-secure CPU 2 may authenticate the secure CPU 1, or the secure CPU 1 and the non-secure CPU 2 may authenticate mutually.

In the first embodiment of the present invention, the case in which the secure CPU 1 authenticates the non-secure CPU 2 is described. The secure CPU 1 in non-secure mode notifies the secure CPU 1 in secure mode of a random number request. When the secure CPU 1 in secure mode is notified of a random number request, the secure CPU 1 in secure mode generates a random number, and returns the random number as a challenge signal to the secure CPU 1 in non-secure mode. By generating a random number by the secure CPU 1 in secure mode, it is possible to improve the security of authentication processing with the non-secure CPU 2. Further, the secure CPU 1 generates a challenge signal in advance of the above-described load processing, and loads the respective programs in the non-secure CPU target program 32 in the RAM 21 of the non-secure CPU 2 to transmit the generated challenge signal at the time of load processing. The secure CPU 1 transmits the challenge signal to the non-secure CPU 2 at the time of load processing, which makes it possible to reduce communication processes between the secure CPU 1 and the non-secure CPU 2.

The non-secure CPU 2 executes the authentication program subjected to TRS 213, and thereafter generates a response signal from the challenge signal received from the secure CPU 1 at the time of load processing and the authentication key, and sends back the response signal to the secure CPU 1.

When the secure CPU 1 in non-secure mode receives the response signal from the non-secure CPU 2, the secure CPU 1 in non-secure mode notifies the secure CPU 1 in secure mode of a verification request to request to verify the response signal. When the secure CPU 1 in secure mode is notified of the verification request, the secure CPU 1 in secure mode judges whether the authentication with the non-secure CPU 2 is successful or failed on the basis of the stored random number, the response signal, and the authentication key, and returns a result of the judgment to the CPU 1 in non-secure mode. The CPU 1 in non-secure mode transmits the result of the judgment to the non-secure CPU 2.

When it is judged that the authentication is successful, the secure CPU 1 in non-secure mode loads the other various programs in the secure CPU target program 31 in the RAM 12 with reference to the activation control program 121, and executes the programs (loading processing). Further, the secure CPU 1 in non-secure mode executes the load program 122, and reads out the other various programs in the non-secure CPU target program 32 from the nonvolatile memory 3 to load those in the RAM 21 of the non-secure CPU 2 (load processing). On the other hand, when it is judged that the authentication is failed, the secure CPU 1 in non-secure mode does not load the other various programs in the secure CPU target program 31 in the RAM 12, and does not load the other various programs in the non-secure CPU target program 32 in the RAM 21 of the non-secure CPU 2.

As described above, in accordance with the information processing apparatus according to the first embodiment of the present invention, by carrying out the falsification verification processing by the secure CPU 1, it is possible to further improve the security thereof more than that of the similar falsification verification processing by the non-secure CPU 2. Further, by activating the secure CPU 1 first at the time of turning on the information processing apparatus, it is possible to ensure the security of processing for activating the non-secure CPU 2 by the secure CPU, and to reliably detect falsification of the programs.

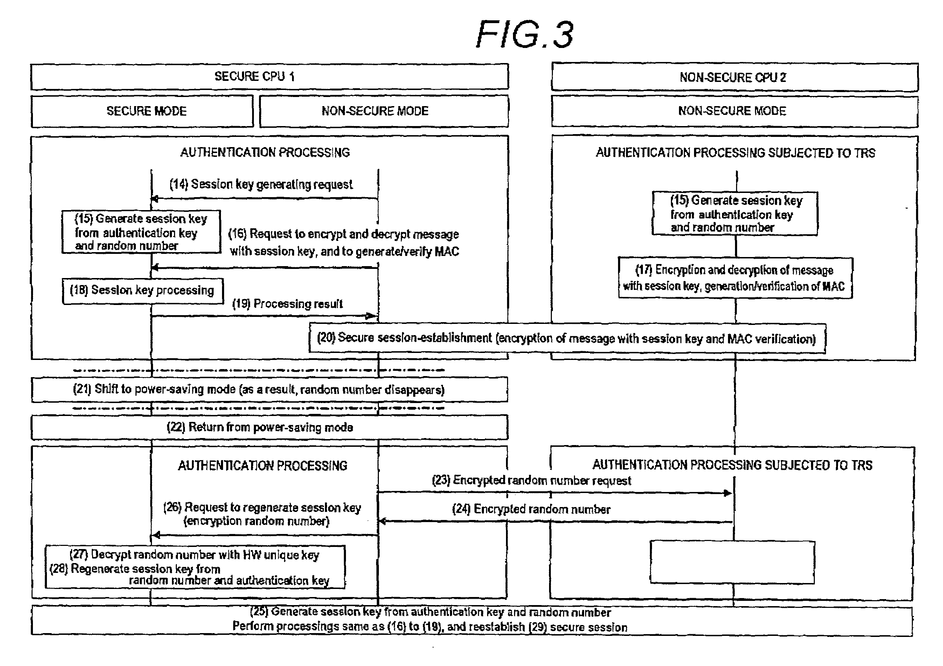

Meanwhile, as described above, the secure CPU 1 authenticates the non-secure CPU 2 in accordance with a challenge and response system at the time of bootstrapping of the secure CPU and the non-secure CPU. The secure CPU 1 and the non-secure CPU 2 may carry out session-establishment processing which will be next described between the secure CPU 1 and the non-secure CPU 2 after the authentication is successful. Fig. 3 shows a processing sequence at the time of session-establishment by the information processing apparatus according to the first embodiment of the present invention.

After the secure CPU 1 in non-secure mode succeeds in authentication with the non-secure CPU 2, the secure CPU 1 in non-secure mode notifies the secure CPU 1 in secure mode of a session key generating request to request to generate a session key. When the secure CPU 1 in secure mode is notified of the session key generating request, the secure CPU 1 in secure mode generates a session key from the authentication key and the random number (challenge signal) used at the time of the authentication in accordance with the challenge and response system. In the same way, after the non-secure CPU 2 succeeds in authentication with the secure CPU 1, the non-secure CPU 2 generates a session key from the authentication key and the random number (challenge signal) used at the time of the authentication in accordance with the challenge and response system.

In the case in which the secure CPU 1 in non-secure mode transmits a message to the non-secure CPU 2 after generating a session key, the secure CPU 1 in non-secure mode requests the secure CPU 1 in secure mode to encrypt the message with the session key and generate an HMAC with the encrypted message and the session key. On the other hand, in the case in which the secure CPU 1 in non-secure mode receives a message from the non-secure CPU 2, the secure CPU 1 in non-secure mode requests the secure CPU 1 in secure mode to decrypt the received message with the session key and verify an HMAC attached to the received message. When the secure CPU 1 in non-secure mode receives the encrypted message and the generated HMAC from the secure CPU 1 in secure mode, the secure CPU 1 in non-secure mode attaches the HMAC to the message to transmit it to the non-secure CPU 2. On the other hand, when the secure CPU 1 in non-secure mode receives the decrypted message and a notification denoting that the authentication with the HMAC is successful from the secure CPU 1 in secure mode, the secure CPU 1 in non-secure mode carries out processing corresponding to the message. In the same way, in the case in which the non-secure CPU 2 transmits a message to the secure CPU 1 after generating a session key, the non-secure CPU 2 performs encryption of the message with the session key and generation of an HMAC with the encrypted message and the session key, and attaches the HMAC to the message to transmit it to the secure CPU 1. On the other hand, in the case in which the non-secure CPU 2 receives a message from the secure CPU 1, the non-secure CPU 2 performs decryption of the received message with the session key and verification for an HMAC attached to the received message, and when the non-secure CPU 2 receives a notification denoting that authentication with the HMAC is successful, the non-secure CPU 2 carries out processing corresponding to the message.

In this way, by performing exchange of messages between the secure CPU 1 and the non-secure CPU 2 by utilizing a session key and an HMAC, it is possible to improve the confidentiality, and as a result, it is possible to prevent a message from being leaked out of the non-secure CPU 2. Note that authentication in accordance with a challenge and response system may be performed at predetermined time intervals between the secure CPU 1 and the non-secure CPU 2. However, after a session is established between the secure CPU 1 and the non-secure CPU 2, in place of authentication in accordance with a challenge and response system, authentication utilizing a session key and an HMAC may be used. Thereby, it is possible to shorten a time taken for authentication between the secure CPU 1 and the non-secure CPU 2.

Meanwhile, in some cases, a power-saving mode for reducing power consumption according to processing is provided in the secure CPU 1 as one of the processor modes. As shown in Fig. 3, the secure CPU 1 which has established a session with the non-secure CPU 2 erases the session key from the RAM 12 in the case in which the secure CPU 1 is shifted to the power-saving mode. Therefore, at the point in time when the secure CPU 1 is shifted to the power-saving mode, the session between the secure CPU 1 and the non-secure CPU 2 is cut off.

In the first embodiment of the present invention, in order to maintain the session between the secure CPU 1 and the non-secure CPU 2 even when the secure CPU 1 is shifted to the power-saving mode, the processing shown in Fig. 3 may be carried out. That is, when the secure CPU 1 transmits a challenge signal (a random number) for authentication in accordance with a challenge and response system to the non-secure CPU 2, the secure CPU 1 transmits the challenge signal along with data encrypted with an HW unique key to the non-secure CPU 2. Or, at the time of shifting to the power-saving mode, the secure CPU 1 transmits the challenge signal (the random number) used for the authentication in accordance with a challenge and response system along with data encrypted with an HW unique key to the non-secure CPU 2. Thereafter, when the secure CPU 1 returns from the power-saving mode, the secure CPU 1 acquires data encrypted with the HW unique key from the non-secure CPU 2, and decrypts the data with the HW unique key, and generates a session key from the challenge signal and the authentication key, to store the generated session key in the RAM 21, and restarts a session with the non-secure CPU 2.

Further, in order to maintain the session, the following processing may be carried out That is, when the secure CPU 1 encrypts a session key with an HW unique key unique to the secure CPU 1 (an encryption key provided to the secure CPU), it stores the session key in the nonvolatile memory 3 at the time of shifting to the power-saving mode. Thereafter, when the secure CPU 1 returns from the power-saving mode, the secure CPU 1 decrypts the session key stored in the nonvolatile memory 3 with the HW unique key, to store the decrypted session key in the RAM 12, and restarts a session with the non-secure CPU 2.

### (Second Embodiment)

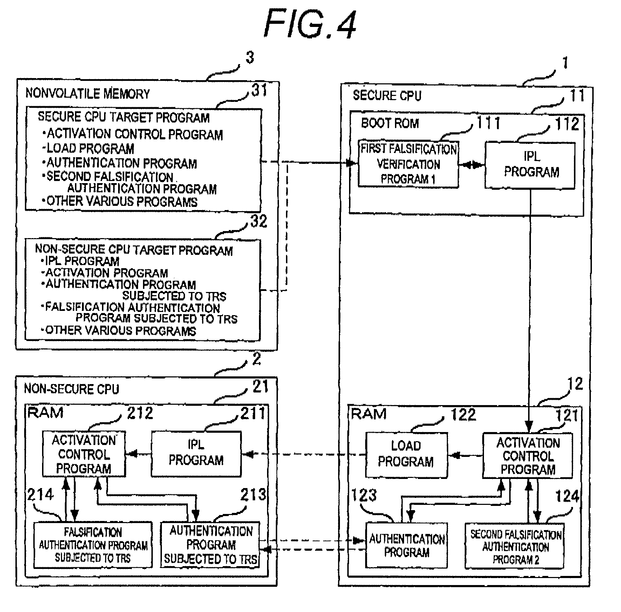

In the first embodiment of the present invention, the secure CPU 1 takes charge of all the falsification verification processings for the respective programs in the secure CPU target program 31 and the respective programs in the non-secure CPU target program 32. Further, in the first embodiment of the present invention, the apparatus is configured to perform falsification verification processing with reference to the first falsification verification program stored in the boot ROM 11. However, it is difficult to update the first falsification verification program. Therefore, it is desired to separately perform falsification verification processings by causing the non-secure CPU 2 to perform falsification verification processing while maintaining the security thereof comparable with that of falsification verification processing by the secure CPU 1, to shorten a time taken for the falsification verification processings, and to easily update the falsification verification program. In a second embodiment of the present invention, a description is given for a configuration in which it is possible to achieve separately performing of the falsification verification processings by causing the non-secure CPU 2 to perform falsification verification processing, and shortening of a falsification verification processing time. Fig. 4 shows a configuration diagram of hardware in an information processing apparatus according to the second embodiment of the present invention. Note that the functions of hardware or programs to which reference numerals used in common with the configuration diagram of the hardware in the information processing apparatus according to the second embodiment of the present invention shown in Fig. 1 are assigned, are as described in the first embodiment, thus descriptions thereof will be omitted.

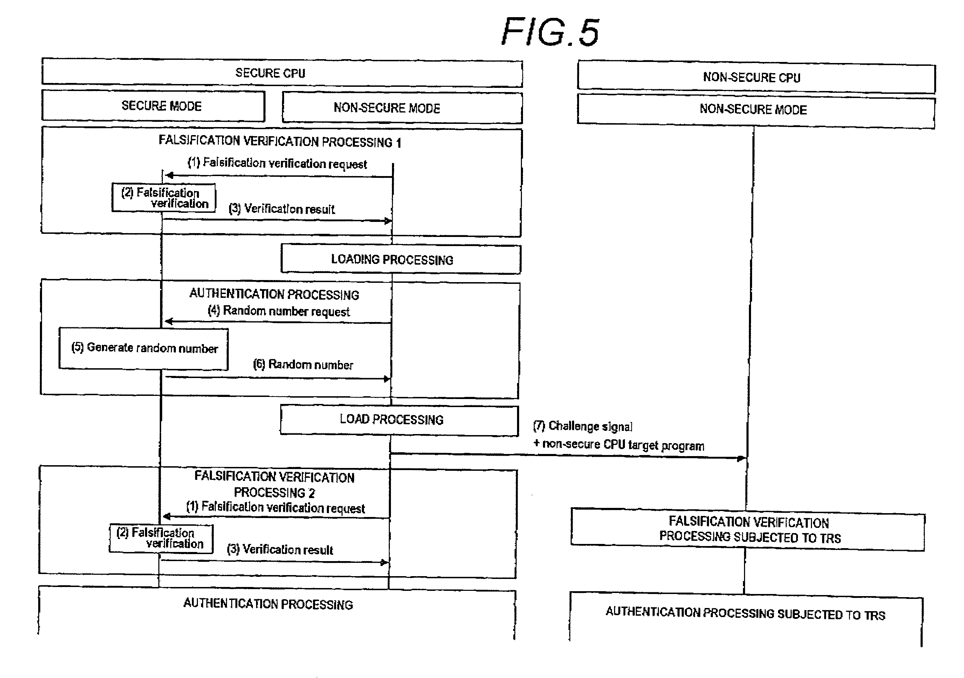

The information processing apparatus according to the second embodiment of the present invention is different from the first embodiment in a configuration in which a second falsification verification program and a falsification verification program subjected to TRS are respectively stored in the secure CPU target program 31 and the non-secure CPU target program 32 in the nonvolatile memory 3. Hereinafter, the processings at the time of bootstrapping of the secure CPU and the non-secure CPU will be described with reference to the sequences of processings at the time of bootstrapping of the secure CPU and the non-secure CPU by the information processing apparatus according to the second embodiment of the present invention as shown in Fig. 5.

In the sequence of Fig. 5, the secure CPU 1 is capable of switching two processor modes of a secure mode and a non-secure mode as described in the first embodiment, and at the time of carrying out processing required to have higher security, the secure CPU 1 executes a program in secure mode. On the other hand, the non-secure CPU 2 executes a program only in non-secure mode.

The information processing apparatus according to the second embodiment of the present invention activates the secure CPU 1 first when the information processing apparatus is turned on. The secure CPU 1 reads out initial addresses of the programs to be first read out of the nonvolatile memory 3 to activate (the respective programs in the secure CPU target program 31 and the respective programs in the non-secure CPU target program 32 in Fig. 4) with reference to an IPL (Initial Program Loader) program stored in the boot ROAM 12. The secure CPU 1 specifies programs to be falsification-verified in the nonvolatile memory 3 on the basis of the initial addresses read out with reference to the IPL program, and carries out falsification verification processing with reference to the first falsification verification program stored in the boot ROM 11.

The falsification verification processing by the secure CPU 1 is as follows. The secure CPU 1 activated in non-secure mode notifies the secure CPU 1 in secure mode of a falsification verification request. When the secure CPU 1 in secure mode is notified of the falsification verification request, the secure CPU 1 in secure mode performs falsification verification for the activation control program, the load program, and the second falsification verification program in the secure CPU target program 31 and the IPL program, the activation control program, and the falsification verification program subjected to TRS in the non-secure CPU target program 32 which are recorded in the nonvolatile memory 3. As a technique of falsification verification, well-known falsification verification such as a technique using a digital signature or a technique using an HMAC is applied. The secure CPU 1 in the secure mode that has performed falsification verification notifies the secure CPU 1 in non-secure mode of the result of falsification verification. When the CPU 1 in non-secure mode is notified that there is falsification in at least one of the activation control program, the load program, and the second falsification verification program in the secure CPU target program 31 as a result of the falsification verification, the secure CPU 1 in non-secure mode does not load all those programs in the RAM 12. Further, as the secure CPU 1 in non-secure mode is notified that there is falsification in at least one of the IPL program, the activation control program, and the falsification verification program subjected to TRS in the non-secure CPU target program 32 as a result of the falsification verification, the secure CPU 1 in non-secure mode does not load all those programs in the RAM 21 of the non-secure CPU 2.

When the secure CPU 1 in non-secure mode is notified that there is no falsification to the respective programs in the secure CPU target program 31 and the respective programs in the non-secure CPU target program 32 as a result of the falsification verification, first, the secure CPU 1 in non-secure mode loads the activation control program 121 in the secure CPU target program 31 read out of the nonvolatile memory 3, in the RAM 12, and executes the activation control program. The activation control program 121 has a function of instructing the secure CPU 1 on programs to be loaded in the RAM 12, to cause the secure CPU 1 to load the programs. Next, the secure CPU 1 in non-secure mode loads the load program 122 and the second falsification verification program 124 in the RAM 12 with reference to the activation control program 121. The loading of the activation control program 121, the load program 122, and the second falsification verification program 124 by the secure CPU 1, to the RAM 12, corresponds to the loading processing in Fig. 5.

The secure CPU 1 in non-secure mode executes the load program 122 loaded in the RAM 12. The load program 122 has a function of causing the secure CPU 1 to load the non-secure CPU target program 32 read out of the nonvolatile memory 3 in the RAM 21 of the non-secure 2. Therefore, the secure CPU 1 which has executed the load program 122 reads out the IPL program, the activation control program, and the falsification verification program subjected to TRS in the non-secure CPU target program 32 from the nonvolatile memory 3, to load those in the RAM 21 of the non-secure CPU 2 (which corresponds to the load processing in Fig. 5). On the other hand, the non-secure CPU 2 in which the non-secure CPU target program 32 is loaded in the RAM 21 reads out an initial address of an activation control program to be first read out of the RAM 21 to activate with reference to the IPL program 211. The non-secure CPU 2 specifies the activation control program 212 stored in the RAM 21 on the basis of the initial address of the activation control program 212 read out with reference to the IPL program 211, and executes the activation control program 212. The activation control program 212 has a function of instructing the non-secure CPU 2 on programs to be executed thereby. Next, the non-secure CPU 2 executes a falsification verification program subjected to TRS 214 specified with reference to the activation control program 212.

Next, the secure CPU 1 in non-secure mode executes the second falsification verification program 124 loaded in the RAM 12. The second falsification verification program 124 has a function of verifying the presence or absence of falsification with respect to the secure CPU target program 31. The falsification verification processing by the secure CPU 1 is as follows. The secure CPU 1 activated in non-secure mode notifies the secure CPU 1 in secure mode of a falsification verification request. When the secure CPU 1 in secure mode is notified of the falsification verification request, the secure CPU 1 in secure mode performs falsification verification for the authentication program and the other various programs in the secure CPU target program 31 recorded in the nonvolatile memory 3. As a technique of falsification verification, well-known falsification verification such as a technique using a digital signature or a technique using an HMAC is applied. The secure CPU 1 in the secure mode that has performed falsification verification notifies the secure CPU 1 in non-secure mode of the result of falsification verification. When the CPU 1 in non-secure mode is notified that there is falsification to the authentication program in the secure CPU target program 31 as a result of the falsification verification, the secure CPU 1 in non-secure mode does not load the authentication program in the RAM 12. On the other hand, when the secure CPU 1 in non-secure mode is notified that there is no falsification to the authentication program in the secure CPU target program 31 as a result of the falsification verification, the secure CPU 1 in non-secure mode executes the authentication program 123 loaded in the RAM 12. Authentication processing in the case in which the authentication program 123 is executed by the secure CPU 1 is as described in the first embodiment, thus descriptions thereof will be omitted.

As described above, the secure CPU 1 verifies the presence or absence of falsification with respect to the second falsification verification program stored in the nonvolatile memory 3 with reference to the first falsification verification program stored in the boot ROM 11, and moreover, when it is judged that there is not falsification with respect to the second falsification verification program, the secure CPU 1 verifies the presence or absence of falsification with respect to the various programs in the secure CPU target program 31 stored in the nonvolatile memory 3 with reference to the second falsification verification program. Therefore, the security of the second falsification verification program loaded in the RAM 12 is to be ensured by falsification verification by the first falsification verification program. As a result, even if the second falsification verification program stored in the nonvolatile memory 3 is updated, it is possible to maintain the security thereof comparable with that of falsification verification processing by the secure CPU 1.

Further, the non-secure CPU 2 executes the falsification verification program subjected to TRS 214 loaded in the RAM 21. The falsification verification program subjected to TRS (Tamper Resistant Software) is made tamper-resistant. Therefore, the falsification verification program subjected to TRS 214 is, even loaded in the RAM 21 of the non-secure CPU 2 with lower security than that of the secure CPU 1, improved in security. The falsification verification program subjected to TRS 214 has a function of verifying the presence or absence of falsification with respect to the non-secure CPU target program 32. The falsification verification processing by the non-secure CPU 2 is as follows. The non-secure CPU 2 performs falsification verification for the authentication program subjected to TRS 213 and the other various programs in the non-secure CPU target program 32 recorded in the nonvolatile memory 3. As a technique of falsification verification, well-known falsification verification such as a technique using a digital signature or a technique using an HMAC is applied. When the non-secure CPU 2 is notified that there is falsification with respect to the authentication program subjected to TRS 213 in the non-secure CPU target program 32 as a result of the falsification verification, the non-secure CPU 2 does not load the authentication program subjected to TRS 213 in the RAM 21. On the other hand, when the non-secure CPU 2 is notified that there is no falsification to the authentication program subjected to TRS 213 in the non-secure CPU target program 32 as a result of the falsification verification, the non-secure CPU 2 executes the authentication program subjected to TRS 213 loaded in the RAM 21. Authentication processing in the case in which the authentication program subjected to TRS 213 is executed by the non-secure CPU 2 is as described in the first embodiment, thus descriptions thereof will be omitted.

As described above, the non-secure CPU 2 verifies the presence or absence of falsification with respect to the various programs in the non-secure CPU target program 32 stored in the nonvolatile memory 3 with reference to the falsification verification program subjected to TRS judged that there is no falsification by the secure CPU 1. Further, the falsification verification program subjected to TRS is made tamper-resistant, and it is difficult to falsify its code. Therefore, it is possible to shorten a time taken for the falsification verification processing by causing the non-secure CPU 2 to perform falsification verification processing while maintaining the security thereof comparable with that of falsification verification processing by the secure CPU 1.

### Industrial Applicability

In accordance with the information processing apparatus and the falsification verification method of the present invention, there is brought about the advantage that it is possible to reliably detect falsification of the programs by the secure CPU and the non-secure CPU, that is useful in the field of information processing apparatus including processors (CPUs) that switch processor modes as needed at the time of executing a program code.

## Claims

1. An information processing apparatus comprising:
a first CPU that executes various programs in a processor mode with higher security than that of a second CPU;
a program storage section that stores the various programs to be executed by the first CPU and various programs to be executed by the second CPU;
a falsification verification program storage section that stores a falsification verification program for verifying the presence or absence of falsification of the various programs; and
a first RAM,
wherein the first CPU includes: a first falsification verification unit which is adapted to verify the presence or absence of falsification of the various programs stored in the program storage section with reference to the falsification verification program stored in the falsification verification program storage section; a first program activation unit which is adapted to load the various programs to be executed by the first CPU stored in the program storage section into the first RAM according to a result verified by the first falsification verification unit; and a load unit which is adapted to output the various programs to be executed by the second CPU stored in the program storage section to the second CPU.

2. The information processing apparatus according to claim 1, wherein the first CPU further includes an output unit,
when the presence of falsification is detected as a result of verification performed by the first falsification verification unit, the first program activation unit does not load all the various programs to be executed by the first CPU stored in the program storage section, or the various programs in which the presence of falsification is detected, and
when the presence of falsification is detected as a result of verification performed by the first falsification verification unit, the output unit outputs that the presence of falsification is detected.

3. The information processing apparatus according to claim 1 or claim 2,
wherein
the first CPU includes a first authentication unit which is adapted to authenticate the second CPU, and
the load unit outputs the various programs to be executed by the second CPU stored in the program storage section to the second CPU succeeding in authentication by the first authentication unit.

4. The information processing apparatus according to any one of claims 1 to 3, wherein
the first CPU includes a second falsification verification unit which is adapted to verify the presence or absence of falsification of the various programs stored in the program storage section with reference to a falsification verification program loaded in the first RAM by the first program activation unit.

5. The information processing apparatus according to any one of claims 1 to 4, further comprising the second CPU.

6. The information processing apparatus according to claim 5, further comprising a second RAM, wherein
the second CPU includes a second program activation unit which is adapted to load the various programs to be executed by the second CPU which are input from the first CPU into the second RAM.

7. The information processing apparatus according to claim 6, wherein
the second CPU includes a second authentication unit which is adapted to authenticate the first CPU.

8. The information processing apparatus according to claim 7, wherein the authentication program is made tamper-resistant.

9. The information processing apparatus according to any one of claims 5 to 8, wherein
the second CPU includes a third falsification verification unit which is adapted to verify the presence or absence of falsification of the various programs to be executed by the second CPU which are input from the first CPU, with reference to a falsification verification program loaded in the second RAM by the second program activation unit.

10. The information processing apparatus according to claim 9, wherein the third falsification verification unit is made tamper-resistant.

11. A falsification verification method performed by a second CPU that executes various programs in a processor mode with higher security than that of a first CPU, the method comprising the steps of:
verifying the presence or absence of falsification of various programs stored in a nonvolatile memory with reference to a falsification verification program stored in a boot memory;
loading various programs to be executed by the first CPU stored in the nonvolatile memory into the first RAM according to a verification result; and
outputting the various programs to be executed by the second CPU stored in the nonvolatile memory to the second CPU.

## Amended claims

### Amended claims under Art. 19.1 PCT

**1.** An information processing apparatus comprising:
a first CPU;
N (N ≥ 1) second CPUs;
a program storage section that stores a second falsification verification program and a first program, and N second programs;
a falsification verification program read-only storage section that stores a first falsification verification program;
a first RAM; and
N second RAMs, wherein
the first CPU includes, at the time of bootstrapping of the information processing apparatus:
a first falsification verification unit which is adapted to verify the presence or absence of falsification of the second falsification verification program with reference to the first falsification verification program;
a first program activation unit which is adapted to load and execute the second falsification verification program in the first RAM according to a result verified by the first falsification verification unit;
a second falsification verification unit which is adapted to verify the presence or absence of falsification of the first program and the N second programs with reference to the second falsification verification program loaded in the first RAM;
the first program activation unit which is adapted to load and execute the first program in the first RAM according to a result verified by the second falsification verification unit; and
a load unit which is adapted to output the N second programs to the N second RAMs, respectively, and
the second CPU includes a second program activation unit which is adapted to execute the second program output to the second RAM.

**2.** An information processing apparatus comprising:
a first CPU;
N (N ≥ 1) second CPUs;
a program storage section that stores a first program, and N third falsification verification programs and N second programs;
a falsification verification program read-only storage section that stores a first falsification verification program;
a first RAM; and
N second RAMs, wherein
the first CPU includes, at the time of bootstrapping of the information processing apparatus:
a first falsification verification unit which is adapted to verify the presence or absence of falsification of the first program and the N third falsification verification programs with reference to the first falsification verification program;
a first program activation unit which is adapted to load and execute the first program in the first RAM according to a result verified by the first falsification verification unit; and
a load unit which is adapted to output the N third falsification verification programs and the N second programs to the N second RAMs, respectively, and
the second CPU includes: a third falsification verification unit which is adapted to verify the presence or absence of falsification of the second program loaded in the second RAM with reference to the third falsification verification program output to the second RAM; and a second program activation unit which is adapted to execute the second program according to a result verified by the third falsification verification unit.

**3.** An information processing apparatus comprising:
a first CPU;
N (N ≥ 1) second CPUs;
a program storage section that stores a second falsification verification program and a first program, and N third falsification verification programs and N second programs;
a falsification verification program read-only storage section that stores a first falsification verification program;
a first RAM; and
N second RAMs, wherein
the first CPU includes, at the time of bootstrapping of the information processing apparatus:
a first falsification verification unit which is adapted to verify the presence or absence of falsification of the second falsification verification program with reference to the first falsification verification program;
a first program activation unit which is adapted to load and execute the second falsification verification program in the first RAM according to a result verified by the first falsification verification unit;
a second falsification verification unit which is adapted to verify the presence or absence of falsification of the first program and the N third falsification verification programs with reference to the second falsification verification program loaded in the first RAM;
the first program activation unit which is adapted to load and execute the first program which has been verified according to a result verified by the second falsification verification unit; and
a load unit which is adapted to output the N third falsification verification programs and the N second programs to the N second RAMs, respectively, and
the second CPU includes: a third falsification verification unit which is adapted to verify the presence or absence of falsification of the second program output to the second RAM with reference to the third falsification verification program output to the second RAM; and a second program activation unit which is adapted to execute the second program according to a result verified by the third falsification verification unit.

**4.** An information processing apparatus comprising:
a first CPU;
N (N ≥ 1) second CPUs;
a program storage section that stores a first program and N second programs;
a falsification verification program storage section that stores a first falsification verification program;
a first RAM; and
N second RAMs, wherein
the first CPU includes, at the time of bootstrapping of the information processing apparatus:
a first falsification verification unit which is adapted to verify the presence or absence of falsification of the first program and the N second programs with reference to the first falsification verification program;
a first program activation unit which is adapted to load and execute the first program loaded in the first RAM according to a result verified by the first falsification verification unit; and
a load unit which is adapted to output the N second programs to the N second RAMs, respectively, and
the second CPU includes a second program activation unit which is adapted to execute the second program output to the second RAM.

**5.** The information processing apparatus according to claim 1 or claim 3,
wherein
falsification verification processing has multistage processes by comprising one or more falsification verification programs and one or more falsification verification units for performing a falsification verification subsequent to the falsification verification performed by the first falsification verification unit with reference to the first falsification verification program or the falsification verification performed by the second falsification verification unit with reference to the second falsification verification program.

**6.** The information processing apparatus according to any one of claims 1 to 5, wherein
the first program activation unit loads and executes a first authentication program stored in the program storage section, in the first RAM, thereby to authenticate the one or more second CPUs, and the load unit outputs to corresponding second CPU which is authenticated in success, various programs which are stored in the program storage section and to be executed by the corresponding second CPU.

**7.** The information processing apparatus according to any one of claims 1 to 6, wherein
the first program activation unit loads and executes a first authentication program and a first secure session-establishment program which are stored in the program storage section, in the first RAM, thereby to authenticate the one or more second CPUs,
the load unit loads the one or more second authentication programs and second secure session-establishment programs which are stored in the program storage section, in the second RAMs correspondingly, and the second program activation unit authenticates the first CPU with reference to the second authentication program,
when the mutual authentication results in success, the first CPU executes the first session-establishment program to establish a secure session with the corresponding second CPU that executes the corresponding second secure session-establishment program, and
the load unit outputs various programs which are stored in the program storage section and to be executed by the corresponding second CPU to the corresponding second CPU on the secure session.

**8.** The information processing apparatus according to any one of claims 1 to 7, wherein
any or all of the second authentication program, the second secure session-establishment program, the third falsification verification program, the third falsification verification unit and the second program activation unit are subjected to tamper-resistance.

**9.** The information processing apparatus according to any one of claims 1 to 8, wherein
any or all of the second authentication program, the second secure session-establishment program, the third falsification verification program, the third falsification verification unit and the second program activation unit are falsification-verified by a set of the first falsification verification program and the first falsification verification unit or by a set of the second falsification verification program and the second falsification verification unit, and the falsification-verified programs and units are loaded in the second RAM according to a result of falsification-verification.

**10.** The information processing apparatus according to any one of claims 6 to 9, wherein
the first authentication program, the second authentication program, the first secure session-establishment program, and the second secure session-establishment program contains unique authentication keys that correspond to the respective second CPUs.

**11.** The information processing apparatus according to any one of claims 1 to 10, wherein
the first CPU is provided with a secure mode that indicates a higher secured processing mode, and a part or all of the falsification verification processing and the authentication processing performed by the first CPU are processed in the secure mode.

**12.** The information processing apparatus according to any one of claims 6 to 9, wherein
the first CPU is further provided with a unique key that is associated with the first CPU and a power-saving mode, and
the first CPU
generates encryption authentication processing information in which authentication processing information utilized in the authentication processing is encrypted with the unique key,
transmits the encryption authentication processing information to the second CPU or the second RAM before transition of the power-saving mode,
receives the encryption authentication processing information when the first CPU returns from the power-saving mode,
decrypts the encryption authentication processing information with the unique key, and
performs the authentication processing by the decrypted authentication processing information.

**13.** The information processing apparatus according to any one of claims 6 to 9, wherein
the first CPU is further provided with a unique key that is associated with the first CPU and a power-saving mode, and
the first CPU
generates encryption authentication processing information in which authentication processing information utilized in the authentication processing is encrypted with the unique key,
saves the encryption authentication processing information to an encryption authentication processing information non-volatile storage section before transition of the power-saving mode,
reads out the encryption authentication processing information from the encryption authentication processing information non-volatile storage section when the first CPU returns from the power-saving mode,
decrypts the encryption authentication processing information with the unique key, and
performs the authentication processing by the decrypted authentication processing information.
